# EUROPÄISCHE PATENTSCHRIFT

(11) **EP 1 303 574 B1**
(45) Veröffentlichungstag und Bekanntmachung des Hinweises auf die Patenterteilung: **23.01.2008**
(21) Anmeldenummer: 01965128.0
(22) Anmeldetag: 13.07.2001
(51) Int. Cl.: C09K 5/20

(54) **Schutz von Verbrennungsmotoren aus Magnesium oder Magnesiumlegierungen vor Korrosion unter Verwendung von Gefrierschutzmittelkonzentraten auf Basis von Amiden.**
Protection of engines made of Magnesium or Magnesium alloys from corrosion by using Amide-Based antifreezing concentrates .
Protection contre la corrosion de moteurs thermiques en magnesium ou en alliage de magnésium par l'utilisation de concentrés d'antigel à base d'amides.

(30) Priorität: 24.07.2000 DE 10036031
(43) Veröffentlichungstag der Anmeldung: 23.04.2003
(73) Patentinhaber: BASF Aktiengesellschaft, 67056 Ludwigshafen (DE)
(72) Erfinder: WENDEROTH, Bernd, 69488 Birkenau (DE); SCHÄKER, Karlheinz, 67435 Neustadt (DE)
(86) Internationale Anmeldenummer: PCT/EP2001/008108
(87) Internationale Veröffentlichungsnummer: WO 2002/008354

(56) Entgegenhaltungen:
- EP-A- 0 048 429
- WO-A-86/00917
- US-A- 3 362 910
- DATABASE WPI Section Ch, Week 197925 Derwent Publications Ltd., London, GB; Class D13, AN 1979-46540B XP002184193 & JP 54 059655 A (ASAHI GLASS CO LTD), 14. Mai 1979 (1979-05-14)
- DATABASE WPI Section Ch, Week 200023 Derwent Publications Ltd., London, GB; Class A97, AN 2000-268329 XP002184194 & RU 2 125 074 C (GELIS INT STOCK CO), 20. Januar 1999 (1999-01-20)
- DATABASE WPI Section Ch, Week 199732 Derwent Publications Ltd., London, GB; Class E19, AN 1997-349462 XP002184195 & SU 1 549 048 A (AS USSR PHYS CHEM INST), 10. Dezember 1996 (1996-12-10)

## Beschreibung

Die vorliegende Erfindung betrifft ein Verfahren zum Schutz von Verbrennungsmotoren aus Magnesium oder Magnesiumlegierungen vor Korrosion.

Gefrierschutzmittelkonzentrate für die Kühlkreisläüfe von Verbrennungsmotoren, beispielsweise in Automobilen, enthalten meist Alkylenglykole, vor allem Ethylenglykol oder Propylenglykol, als Hauptkomponente. Zur Verwendung im Kühlsystem werden sie mit Wasser verdünnt und sollen neben Frostschutz auch für eine gute Wärmeabfuhr sorgen. Alkylenglykol/Wasser-Mischungen sind allerdings bei den Betriebstemperaturen von Verbrennungsmotoren sehr korrosiv. Deswegen müssen die verschiedenen Metalle und deren Legierungen, die im Kühlsystem vorkommen, ausreichend vor den verschiedensten Korrosionsarten, z. B. Lochfraßkorrosion, Spaltkorrosion, Erosion oder Kavitation, geschützt werden.

Zur Verwendung als Korrosionsinhibitoren in derartigen Kühlsystemen für eine Vielfalt unterschiedlicher Metalle wie Stahl, Gußeisen, Kupfer, Messing, Aluminium und deren Legierungen sowie Lötmetalle wie beispielsweise Lötzinn sind im Stand der Technik bereits eine Vielzahl chemischer Individuen bekannt. Die daraus resultierenden Kühlerschutzmittel erfüllen bei Ihrer Verwendung zur Kühlung der heute überwiegend von der Kfz-Industrie eingesetzten Motoren aus Grauguß oder Gußaluminium-Legierungen die in sie gestellten Erwartungen bezüglich Korrosionsschutz.

Im Automobilbau wird derzeit versucht, durch Gewichtsreduzierung bei Kraftfahrzeugen den Treibstoffverbrauch abzusenken. So versucht man zum Beispiel, das Gewicht von Motoren dadurch zu verringern, daß man sie teilweise oder vollständig aus Magnesium oder Magnesiumlegierungen konstruiert.

Versuche haben jedoch gezeigt, daß wegen der erhöhten chemischen Reaktivität von Magnesium die heute auf dem Markt befindlichen Kühlerschutzmittel nahezu keinen Korrosionsschutz für dieses Metall und dessen Legierungen bieten.

Trotzdem existieren bisher nur wenige Patentpublikationen, die Lösungen für diese Problematik anbieten.

Bereits 1931 wird im DRP 569 771 (1) eine Kühlflüssigkeit für aus Magnesiumlegierungen bestehende Teile von Brennkraftmaschinen, bestehend in einem mehrwertigen Alkohol mit einem Gehalt an geringen Mengen eines Alkalifluorids, gegebenenfalls in Anwesenheit von Wasser, beschrieben.

Im gleichen Jahr wird im DRP 579 185 (2) die Verwendung von Alkalisulfiden für den gleichen Einsatzzweck beschrieben.

Der Einsatz von Fluoriden oder Sulfiden ist jedoch heute wegen der toxikologischen Bedenklichkeit dieser Substanzklassen nicht mehr erwünscht.

WO 95/07323 (3) beschreibt wasserfreie Kühlerschutzmittel auf Basis von Monopropylenglykol, enthaltend Molybdat, Nitrat und ein Azolderivat wie Tolutriazol zum Korrosionsschutz verschiedener Metalle, darunter auch Magnesium und Magnesiumlegierungen. Wasserfreie Kühlerschutzmittel sind jedoch wegen ihrer schlechten Wärmeleitfähigkeit nicht praxisrelevant.

EP 229 440 B1 (4) beschreibt Kühlmittelkonzentrate, die auch Korrosionsschutz-Eigenschaften für Magnesium aufweisen sollen, enthaltend aliphatische Monocarbonsäuresalze, aliphatische Dicarbonsäuresalze und ein Kohlenwasserstofftriazol sowie gegebenenfalls zusätzlich ein Alkalimetallborat, -silikat, -benzoat, -nitrat, -nitrit, -molybdat und/oder ein Kohlenwasserstoffcarbazol. Konkrete Korrosionstestergebnisse werden jedoch für Magnesium nicht beschrieben.

EP 251 480 B1 (5) beschreibt Kühlmittelkonzentrate, enthaltend Alkylbenzoesäuresalze, aliphatische Monocarbonsäuresalze und ein Triazol sowie gegebenenfalls weitere Komponenten, die nicht nur bei den bisher üblichen im Motorenbau verwendeten Metallen, sondern auch bei Magnesium zu einem verbesserten Korrosionsschutz führen sollen. Konkrete Korrosionstestergebnisse werden jedoch für Magnesium auch hier nicht aufgeführt.

Als Verbesserung gegenüber (5) beschreibt WO 00/22189 (6) Kühlflüssigkeiten, welche eine Kombination von Carbonsäuresalzen mit Fluorid und/oder Fluorcarbonsäuresalzen enthalten. Nachteilig ist jedoch hier insbesondere die Verwendung der toxikologisch bedenklichen Fluorwasserstoffsäure für die Herstellung dieser Mittel.

WO 99/19418 (7) beschreibt eine Kühlflüssigkeit auf Basis mehrwertiger Alkohole für Bauteile aus Magnesium, bestehend aus einer Kombination aus verzweigten aliphatischen Carbonsäuresalzen und Alkanolaminphosphaten sowie Tolutriazol/Benzotriazol, der gegebenenfalls weitere Additive wie aliphatische oder aromatische Mono- und/oder Dicarbonsäuresalze, Mercaptobenzthiazol oder Carboxymethylcellulose zugesetzt werden können. Die Korrosionstestergebnisse sind jedoch insbesondere in Gegenwart von größeren Mengen Wasser unzureichend.

Aufgabe der vorliegenden Erfindung war es daher, entsprechende Gefrierschutzmittelkonzentrate bereitszustellen, welche die Nachteile des Standes der Technik nicht mehr aufweisen.

Über den Einsatz von Carbonsäureamiden oder Sulfonsäureamiden als Korrosionsinhibitoren ist bisher wenig bekannt. So beschreibt EP 320 281 A1 (8) die Verwendung von Anthranilsäureamid in synthetischen Schmierölen auf Esterbasis für Turbomotoren als Korrosionsinhibitor.

Aus EP 341 536 B1 (9) ist die Verwendung von bestimmten aromatischen Sulfonamidocarbonsäuren als wasserlösliche Korrosionsinhibitoren für Reinigungsprozesse, Kühlwasser, Kühlschmierstoffe, Hydraulikflüssigkeiten und andere funktionelle Lösungen und Emulsionen bekannt. Dadurch wird Korrosion an Eisen, Aluminium, Zink, Kupfer und deren Legierungen unterbunden.

Der Einsatz von Amiden als Korrosionsinhibitoren in Gefrierschutzmittelkonzentraten auf Basis von Alkylenglykolen, Glycerin oder deren Derivaten aus US 3 362 910, EP-A 048 429 und JP-A 54/059 655 bekannt. Dort wird Benzamid in entsprechenden Kühlmitteln für Verbrennungsmotoren aus Eisen, Stahl und Leichtmetallen wie Aluminium oder Aluminiumlegierungen verwendet.

Überraschenderweise wurde nun gefunden, daß Carbonsäure- und Sulfonsäureamide gut wirksame Korrosionsinhibitoren für Magnesium und Magnesiumlegierungen in Kühlerschutzmitteln, welche auf derartigen Gefrierschutzmittelkonzentraten basieren, darstellen.

Demgemäß wurde ein Verfahren zum Schutz von Verbrennungsmotoren aus Magnesium oder Magnesiumlegierungen vor Korrosion gefunden, welches dadurch gekennzeichnet ist, daß man für die Kühlsysteme der Verbrennungsmotoren Kühlmittelzusammensetzungen verwendet, die auf Gefrierschutzmittelkonzentraten auf Basis von Alkylenglykolen oder deren Derivaten oder von Glycerin beruhen, welche
a) 0,05 bis 10 Gew.-%, bezogen auf die Gesamtmenge des Konzentrates, eines oder mehrerer Carbonsäureamide und/oder Sulfonsäureamide
enthalten.

In einer bevorzugten Ausführungsform wird die Komponente a) aus einem oder mehreren aliphatischen, cycloaliphatischen, aromatischen oder heteroaromatischen Carbonsäureamiden und/oder Sulfonsäureamiden mit jeweils 2 bis 16 C-Atomen, vorzugsweise mit jeweils 3 bis 12 C-Atomen, gebildet.

Die Amide können gegebenenfalls am Stickstoffatom der Amidgruppe alkylsubstituiert sein, beispielsweise durch eine C₁-C₄-Alkylgruppe. Aromatische oder heteroaromatische Grundgerüste des Moleküls können selbstverständlich auch Alkylgruppen tragen. Im Molekül können eine oder mehrere, vorzugsweise eine oder zwei Amidgruppen vorliegen. Die Amide können zusätzliche funktionelle Gruppen, vorzugsweise C₁-C₄-Alkoxy, Amino, Chlor, Fluor, Hydroxy und/oder Acetyl, tragen, insbesondere finden sich solche funktionelle Gruppen als Substituenten an vorhandenen aromatischen oder heteroaromatischen Ringen.

Typische Beispiele für derartige Carbonsäure- und Sulfonsäureamide sind nachfolgend aufgeführt.
- aromatische Carbonsäureamide:
   Benzamid
   2-Methylbenzamid
   3-Methylbenzamid
   4-Methylbenzamid
   2,4-Dimethylbenzamid
   4-tert.-Butylbenzamid
   3-Methoxybenzamid
   4-Methoxybenzamid
   2-Aminobenzamid (Anthranilsäureamid)
   3-Aminobenzamid
   4-Aminobenzamid
   3-Amino-4-methylbenzamid
   2-Chlorbenzamid
   3-Chlorbenzamid
   4-Chlorbenzamid
   2-Fluorbenzamid
   3-Fluorbenzamid
   4-Fluorbenzamid
   2,6-Difluorbenzamid
   4-Hydroxybenzamid
   2-Hydroxybenzamid (Salicylsäureamid)
   Phthalsäurediamid
   Terephthalsäurediamid
- heteroaromatische Carbonsäureamide:
   Nicotinsäureamid (Pyridin-3-carbonsäureamid)
   Picolinsäureamid (Pyridin-2-carbonsäureamid)
- aliphatische Carbonsäureamide:
   Bernsteinsäurediamid
   Adipinsäurediamid
   Propionsäureamid
   Hexansäureamid
- cycloaliphatische Carbonsäureamide mit der Amidgruppierung als Bestandteil des Ringes:
   2-Pyrrolidon
   N-Methyl-2-pyrrolidon
   2-Piperidon
   ε-Caprolactam
- aromatische Sulfonsäureamide:
   Benzolsulfonsäureamid
   o-Toluolsulfonsäureamid
   m-Toluolsulfonsäureamid
   p-Toluolsulfonsäureamid
   4-tert.-Butylbenzolsulfonsäureamid
   4-Fluorbenzolsulfonsäureamid
   4-Hydroxybenzolsulfonsäureamid
   2-Aminobenzolsulfonsäureamid
   3-Aminobenzolsulfonsäureamid
   4-Aminobenzolsulfonsäureamid
   4-Acetylbenzolsulfonsäureamid

In einer weiteren bevorzugten Ausführungsform enthalten die Gefrierschutzmittelkonzentrate zusätzlich nachfolgend aufgeführte nichtionische Verbindungen
j) 0,05 bis 5 Gew.-%, bezogen auf die Gesamtmenge des Konzentrates, eines oder mehrerer aliphatischer, cycloaliphatischer oder aromatischer Amine mit 2 bis 15 C-Atomen, welche zusätzlich Ethersauerstoffatome oder Hydroxylgruppen enthalten können, und/oder
k) 0,05 bis 5 Gew.-%, bezogen auf die Gesamtmenge des Konzentrats, eines oder mehrerer ein- oder zweikerniger ungesättigter oder teilungesättigter Heterocyclen mit 4 bis 10 C-Atomen, welche benzanelliert sein und zusätzliche funktionelle Gruppen tragen können, und/oder
l) 0,05 bis 5 Gew.-% eines oder mehrerer Tetra-(C₁-C₈-alkoxy)-silane (Orthokieselsäure-tetra-C₁-C₈-alkylester), bezogen auf die Gesamtmenge des Konzentrats.

Als aliphatische, cycloaliphatische oder aromatische Amine b) mit 2 bis 15, vorzugsweise 4 bis 8 C-Atomen, welche zusätzlich Ethersauerstoffatome oder Hydroxylgruppen enthalten können, kommen beispielsweise Ethylamin, Propylamin, Isopropylamin, n-Butylamin, Isobutylamin, sec.-Butylamin, tert.-Butylamin, n-Pentylamin, n-Hexylamin, n-Heptylamin, n-Octylamin, Isononylamin, Di-n-propylamin, Diisopropylamin, Di-n-butylamin, Mono-, Di- und Triethanolamin, Piperidin, Morpholin, Anilin oder Benzylamin in Frage. Aliphatische und cycloaliphatische Amine b) sind in der Regel gesättigt.

Bei den Heterocyclen c) handelt es sich beispielsweise um einkernige fünf- oder sechsgliedrige Systeme mit 1, 2 oder 3 Stickstoffatomen oder mit einem Stickstoffatom und einem Schwefelatom, welche benzanelliert sein können. Es können auch zweikernige Systeme aus fünf- und/oder sechsgliedrigen Teilringen mit typischerweise 2, 3, oder 4 Stickstoffatomen eingesetzt werden. Die Heterocyclen c) können zusätzlich funktionelle Gruppen, vorzugsweise C₁-C₄-Alkoxy, Amino und/oder Mercapto, tragen. Das heterocyclische Grundgerüst kann selbstverständlich auch Alkylgruppen tragen.

Typische Beispiele für Heterocyclen c) sind Benztriazol, Tolutriazol, hydriertes Tolutriazol, 1H-1,2,4-Triazol, Benzimidazol, Benzthiazol, Adenin, Purin, 6-Methoxypurin, Indol, Isoindol, Isoindolin, Pyridin, Pyrimidin, 3,4-Diaminopyridin, 2-Aminopyrimidin und 2-Mercaptopyrimidin.

Für die Tetra-(C₁-C₈-alkoxy)-silane d) kommen beispielsweise Tetramethoxysilan, Tetraethoxysilan, Tetra-n-propoxysilan oder Tetra-n-butoxysilan in Frage.

Weiterhin können die Gefrierschutzmittelkonzentrate zusätzlich eine oder mehrere der nachfolgend aufgeführten Verbindungen enthalten
e) 0,05 bis 5 Gew.-%, bezogen auf die Gesamtmenge des Konzentrates, einer oder mehrerer aliphatischer oder aromatischer Monocarbonsäuren mit jeweils 3 bis 16 C-Atomen in Form deren Alkalimetall-, Ammonium- oder substituierten Ammoniumsalze und/oder
f) 0,05 bis 5 Gew.-%, bezogen auf die Gesamtmenge des Konzentrates, einer oder mehrerer aliphatischer oder aromatischer Dicarbonsäuren mit jeweils 4 bis 20 C-Atomen in Form deren Alkalimetall-, Ammonium- oder substituierten Ammoniumsalze und/oder
g) eines oder mehrerer Alkalimetallborate, Alkalimetallphosphate, Alkalimetallsilikate, Alkalimetallnitrite, Alkali- oder Erdalkalimetallnitrate, Molybdate oder Alkali- oder Erdalkalimetallfluoride in Mengen von jeweils bis zu 1 Gew.-%, bezogen auf die Gesamtmenge des Konzentrates und/oder
h) bis zu 1 Gew.-%, bezogen auf die Gesamtmenge des Konzentrates, eines oder mehrerer Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

Bei den Verbindungen der Gruppen e), f) und g) handelt es sich um zusätzliche Korrosionsinhibitoren.

Als derartige lineare, verzweigtkettige oder cyclische aliphatische Monocarbonsäuren e) kommen beispielsweise Propionsäure, Pentansäure, Hexansäure, Cyclohexylessigsäure, Octansäure, 2-Ethylhexansäure, Nonansäure, Isononansäure, Decansäure, Undecansäure oder Dodecansäure in Betracht.

Als derartige aromatische Monocarbonsäure e) eignet sich insbesondere Benzoesäure, daneben kommen auch beispielsweise C₁-bis C₈-Alkylbenzoesäuren wie o-, m-, p-Methylbenzoesäure oder p-tert.-Butylbenzoesäure sowie hydroxylgruppenhaltige aromatische Monocarbonsäuren wie o-, m- oder p-Hydroxybenzoesäure, o-, m- oder p-(Hydroxymethyl)benzoesäure oder Halogenbenzoesäuren wie o-, m- oder p-Fluorbenzoesäure in Betracht.

Typische Beispiele für derartige Dicarbonsäuren f) sind Malonsäure, Bernsteinsäure, Glutarsäure, Adipinsäure, Pimelinsäure, Korksäure, Azelainsäure, Sebacinsäure, Undecandisäure, Dodecandi-säure, Dicyclopentadiendicarbonsäure, Phthalsäure und Terephthalsäure.

Alle genannten Carbonsäuren liegen als Alkalimetallsalze, vor allem als Natrium- oder Kaliumsalze, oder als Ammoniumsalze oder substituierte Ammoniumsalze (Aminsalze) vor, z. B. mit Trialkylaminen oder Trialkanolaminen.

Typische Beispiele für unter g) genannte zusätzliche Korrosionsinhibitoren sind Natriumtetraborat (Borax), Dinatriumhydrogenphosphat, Trinatriumphosphat, Natriummetasilikat, Natriumnitrit, Natriumnitrat, Magnesiumnitrat, Natriumfluorid, Kaliumfluorid, Magnesiumfluorid und Natriummolybdat.

Bei Mitverwendung von Alkalimetallsilikaten werden diese zweckmäßigerweise durch übliche Organosilicophosphonate oder Organosilicosulfonate in üblichen Mengen stabilisiert.

Zusätzlich zu den genannten Inhibitorkomponenten können beispielsweise auch noch lösliche Salze des Magnesiums von organischen Säuren, z. B. Magnesiumbenzolsulfonat, Magnesiummethansulfonat, Magnesiumacetat oder Magnesiumpropionat, Hydrocarbazole oder quaternierte Imidazole, wie sie in der DE-A 196 05 509 beschrieben sind, in üblichen Mengen als weitere Inhibitoren eingesetzt werden.

Der pH-Wert der Gefrierschutzmittelkonzentrate liegt üblicherweise im Bereich von 4 bis 11, vorzugsweise 4 bis 10, insbesondere 4,5 bis 8,5. Dabei kann der gewünschte pH-Wert gegebenenfalls auch durch Zugabe von Alkalimetallhydroxid, Ammoniak oder Aminen zur Formulierung eingestellt werden, festes Natrium- oder Kaliumhydroxid sowie wäßrige Natron- oder Kalilauge sind hierfür besonders geeignet. Mitzuverwendende Carbonsäuren werden zweckmäßigerweise gleich als entsprechende Alkalimetallsalze zugegeben, um automatisch im gewünschten pH-Bereich zu liegen; man kann die Carbonsäuren jedoch auch als freie Säuren zufügen und dann mit Alkalimetallhydroxid, Ammoniak oder Aminen neutralisieren und den gewünschten pH-Bereich einstellen.

Als flüssigalkoholisches Gefrierpunktserniedrigungsmittel, welches normalerweise den Hauptbestandteil (in der Regel mindestens 75 Gew.-%, insbesondere mindestens 85 Gew.-%) der Gefrierschutzmittelkonzentrate ausmacht, eignen sich Alkylenglykole und deren Derivate sowie Glycerin, insbesondere Propylenglykol und vor allem Ethylenglykol. Daneben kommen jedoch auch noch höhere Glykole und Glykolether in Betracht, z.B. Diethylenglykol, Dipropylenglykol sowie Monoether von Glykolen wie der Methyl-, Ethyl-, Propyl- und Butylether von Ethylenglykol, Propylenglykol, Diethylenglykol und Dipropylenglykol. Es können auch Mischungen der genannten Glykole und Glykolether sowie Mischungen dieser Glykole mit Glycerin und gegebenenfalls diesen Glykolethern verwendet werden.

In einer bevorzugten Ausführungsform basieren die Gefrierschutzmittelkonzentrate auf Ethylenglykol oder Propylenglykol oder Mischungen von Alkylenglykolen oder von Glycerin mit Ethylenglykol bzw. Propylenglykol, die jeweils mindestens 95 Gew.-% Ethylenglykol und/oder Propylenglykol und/oder Glycerin enthalten.

Als weitere übliche Hilfsmittel können die Gefrierschutzmittelkonzentrate in üblichen geringen Mengen noch Entschäumer (in der Regel in Mengen von 0,003 bis 0,008 Gew.-%), Farbstoffe sowie Bitterstoffe aus Gründen der Hygiene und der Sicherheit im Falle eines Verschluckens (z.B. vom Typ Denatoniumbenzoat) enthalten.

Aus den beschriebenen Gefrierschutzmittelkonzentraten können gebrauchsfertige wäßrige Kühlmittelzusammensetzungen mit einem erniedrigten Gefrierpunkt, welche Wasser und 10 bis 90 Gew.-%, insbesondere 20 bis 60 Gew.-% der Gefrierschutzmittelkonzentrate umfassen, hergestellt werden.

Die Gefrierschutzmittelkonzentrate zeichnen sich vor allem durch eine effektivere Korrosionsinhibierung bei Magnesium und Magnesiumlegierungen gegenüber den Mitteln des Standes der Technik aus.

Die nachfolgenden Beispiele sollen die Erfindung erläutern, ohne sie jedoch zu beschränken.

### Beispiele

Aus Gefrierschutzmittelkonzentraten wurden die in der Tabelle 1 aufgeführten wäßrigen Kühlmittelzusammensetzungen hergestellt, wobei sich die Gefrierschutzmittelkonzentrate zum Beispiel einfach dadurch erhalten lassen, daß man die Komponenten in Monoethylenglykol löst. Daraus lassen sich die wäßrigen Kühlmittelzusammensetzungen durch einfaches Verdünnen mit Wasser herstellen.

Die Prüfung dieser wäßrigen Kühlmittelzusammensetzungen erfolgte direkt ohne weitere Verdünnung im Statischen Heißflächentest ASTM D 4340 unter Verwendung eines Magnesium-Probenkörpers der Legierung AZ91 HP bzw. an einem Gußaluminium-Probenkörper der Legierung GA1Si6Cu4. Anstelle von konzentrierter Salpetersäure wurde zur Reinigung des Magnesium-Probenkörpers nach dem Test die für dieses Metall besser geeignete Chromsäure verwendet.

Die Ergebnisse sind der Tabelle 2 zu entnehmen. Sie zeigen, daß mit den Kühlmittelzusammensetzungen ein deutlich besserer Korrosionsschutz bei Magnesium als mit aus dem Stand der Technik bekannten Mitteln [Kaliumfluorid enthaltende Formulierung (Beispiel 14); Glysantin^{®} G 30 (Handelsprodukt der BASF Aktiengesellschaft auf Basis üblicher "Organic Acid Techology")] erzielt wird und gleichzeitig ein guter Korrosionsschutz bei Aluminium vorliegt. Die Gewichtszunahme bei Aluminium beim erfindungsgemäßen Beispiel 11 weist hier auf die Ausbildung einer stabilen Schutzschicht hin.

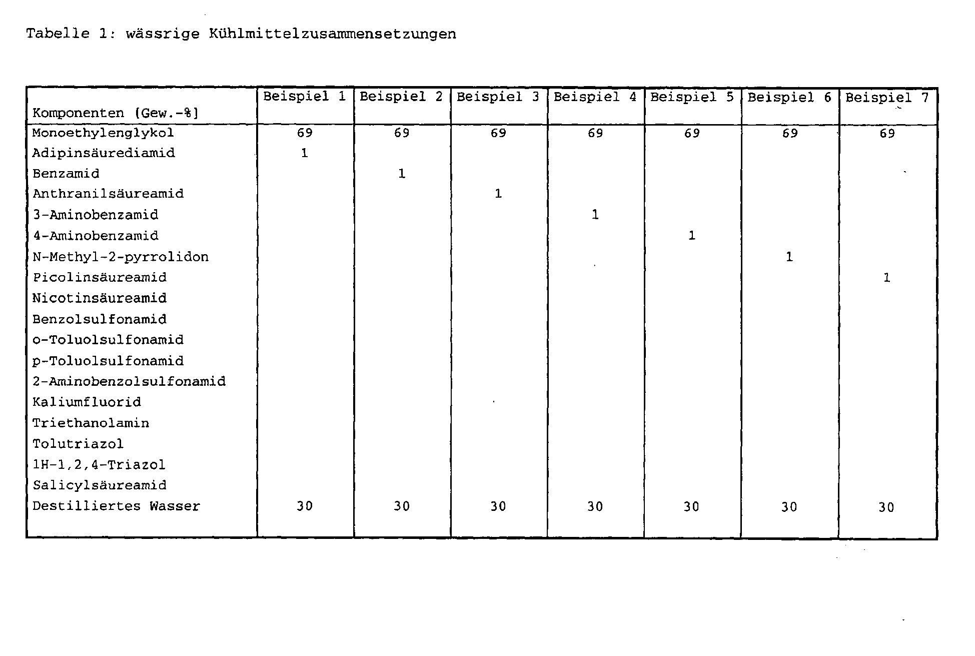

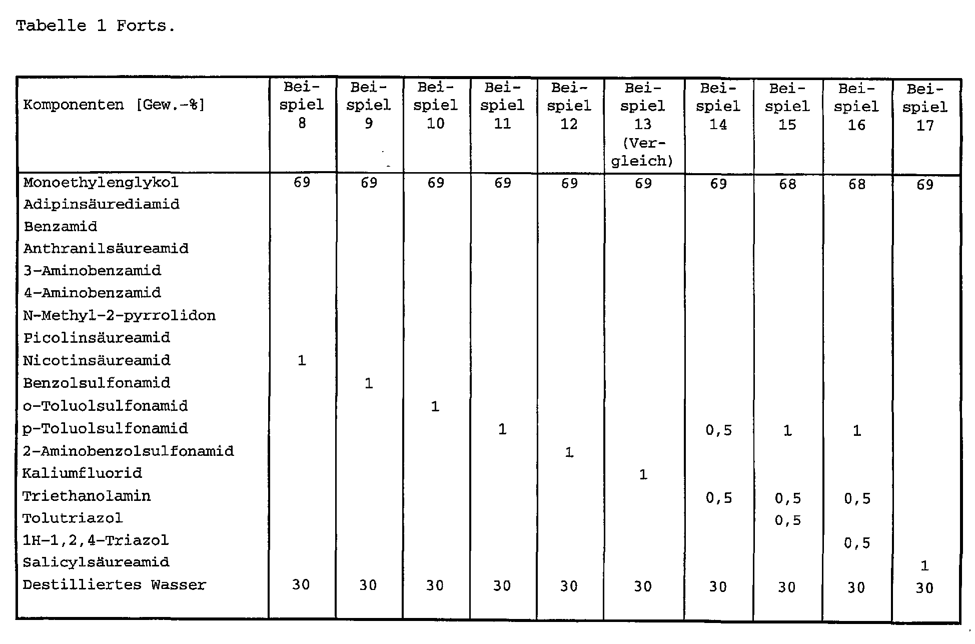

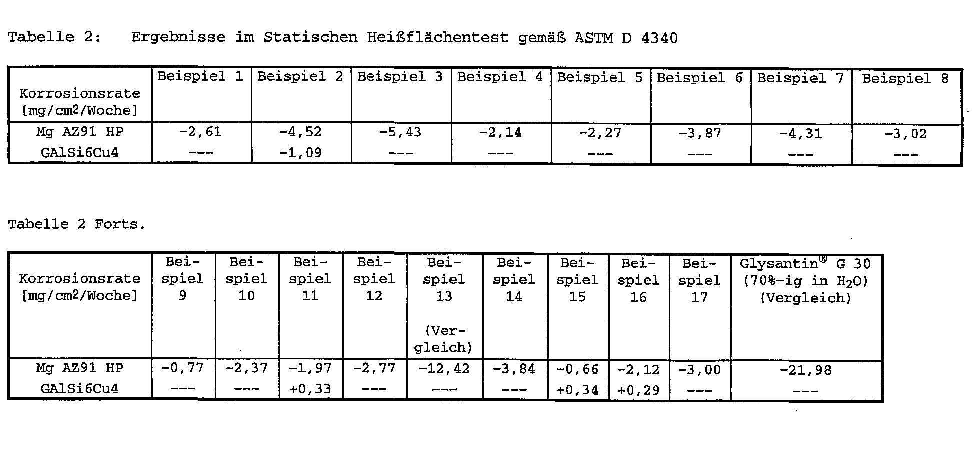

## Patentansprüche

1. Verfahren zum Schutz von Verbrennungsmotoren aus Magnesium oder Magnesiumlegierungen vor Korrosion, **dadurch gekennzeichnet, daß** man für die Kühlsysteme der Verbrennungsmotoren Kühlmittelzusammensetzungen verwendet, die auf Gefrierschutzmittelkonzentraten auf Basis von Alkylenglykolen oder deren Derivaten oder von Glycerin, enthaltend
a) 0,05 bis 10 Gew.-%, bezogen auf die Gesamtmenge des Konzentrates, eines oder mehrerer Carbonsäureamide und/oder Sulfonsäureamide,
beruhen.

2. Verfahren nach Anspruch 1, wobei die Komponente a) aus einem oder mehreren aliphatischen, cycloaliphatischen, aromatischen oder heteroaromatischen Carbonsäureamiden und/oder Sulfonsäureamiden mit jeweils 2 bis 16 C-Atomen, vorzugsweise mit jeweils 3 bis 12 C-Atomen, gebildet wird.

3. Verfahren nach den Ansprüchen 1 bis 2, wobei die Gefrierschutzmittelkonzentrate zusätzlich nachfolgend aufgeführte nichtionische Verbindungen enthalten
b) 0,05 bis 5 Gew.-%, bezogen auf die Gesamtmenge des Konzentrates, eines oder mehrerer aliphatischer, cycloaliphatischer oder aromatischer Amine mit 2 bis 15 C-Atomen, welche zusätzlich Ethersauerstoffatome oder Hydroxylgruppen enthalten können, und/oder
c) 0,05 bis 5 Gew.-%, bezogen auf die Gesamtmenge des Konzentrats, eines oder mehrerer ein- oder zweikerniger ungesättigter oder teilungesättigter Heterocyclen mit 4 bis 10 C-Atomen, welche benzanelliert sein und zusätzliche funktionelle Gruppen tragen können, und/oder
d) 0,05 bis 5 Gew.-% eines oder mehrerer Tetra-(C₁-C₈-alkoxy)-silane (Orthokieselsäure-tetra-C₁-C₈-alkylester), bezogen auf die Gesamtmenge des Konzentrats.

4. Verfahren nach den Ansprüchen 1 bis 3, wobei die Gefrierschutzmittelkonzentrate zusätzlich nachfolgend aufgeführte Verbindungen enthalten
e) 0,05 bis 5 Gew.-%, bezogen auf die Gesamtmenge des Konzentrates, einer oder mehrerer aliphatischer, cycloaliphatischer oder aromatischer Monocarbonsäuren mit jeweils 3 bis 16 C-Atomen in Form deren Alkalimetall-, Ammonium- oder substituierten Ammoniumsalze und/oder
f) 0,05 bis 5 Gew.-%, bezogen auf die Gesamtmenge des Konzentrates, einer oder mehrerer aliphatischer oder aromatischer Dicarbonsäuren mit jeweils 3 bis 20 C-Atomen in Form deren Alkalimetall-, Ammonium- oder substituierten Ammoniumsalze und/oder
g) eines oder mehrerer Alkalimetallborate, Alkalimetallphosphate, Alkalimetallsilikate, Alkalimetallnitrite, Alkali- oder Erdalkalimetallnitrate, Molybdate oder Alkali- oder Erdalkalimetallfluoride in Mengen von jeweils bis zu 1 Gew.-%, bezogen auf die Gesamtmenge des Konzentrates und/oder
h) bis zu 1 Gew.-%, bezogen auf die Gesamtmenge des Konzentrates, eines oder mehrerer Hartwasserstabilisatoren auf Basis von Polyacrylsäure, Polymaleinsäure, Acrylsäure-Maleinsäure-Copolymeren, Polyvinylpyrrolidon, Polyvinylimidazol, Vinylpyrrolidon-Vinylimidazol-Copolymeren und/oder Copolymeren aus ungesättigten Carbonsäuren und Olefinen.

5. Verfahren nach den Ansprüchen 1 bis 4, wobei die Gefrierschutzmittelkonzentrate einen pH-Wert im Bereich von 4 bis 11 aufweisen.

6. Verfahren nach den Ansprüchen 1 bis 5, wobei die Gefrierschutzmittelkonzentrate auf Ethylenglykol oder Propylenglykol oder Mischungen von Alkylenglykolen oder von Glycerin mit Ethylenglykol bzw. Propylenglykol, die jeweils mindestens 95 Gew.-% Ethylenglykol und/oder Propylenglykol und/oder Glycerin enthalten, basieren.

7. Verfahren nach den Ansprüchen 1 bis 6, wobei die Kühlmittelzusammensetzungen gebrauchsfertige wäßrige Kühlmittelzusammensetzungen mit einem erniedrigten Gefrierpunkt, welche Wasser und 10 bis 90 Gew.-% des Gefrierschutzmittelkonzentrates umfassen, darstellen.

8. Verwendung von Gefrierschutzmittelkonzentraten gemäß den Ansprüchen 1 bis 6 zur Herstellung von wäßrigen Kühlmittelzusammesetzungen für Verbrennungsmotoren aus Magnesium oder Magnesiumlegierungen.

## Claims

1. A process for protecting magnesium or magnesium alloy internal combustion engines from corrosion, wherein coolant compositions based on antifreeze concentrates based on alkylene glycols or their derivatives or on glycerol, comprising
a) from 0.05 to 10% by weight, based on the total amount of the concentrate, of one or more carboxamides and/or sulfonamides,
are used for the cooling systems of the internal combustion engines.

2. The process according to claim 1, wherein the component a) is formed from one or more aliphatic, cycloaliphatic, aromatic, or heteroaromatic carboxamides and/or sulfonamides, each of 2 to 16, preferably each of 3 to 12, carbon atoms.

3. The process according to either of claims 1 and 2, wherein the antifreeze concentrates additionally comprise nonionic compounds stated below
b) from 0.05 to 5% by weight, based on the total amount of the concentrate, of one or more aliphatic, cycloaliphatic or aromatic amines of 2 to 15 carbon atoms which may additionally comprise ether oxygen atoms or hydroxyl groups, and/or
c) from 0.05 to 5% by weight, based on the total amount of the concentrate, of one or more mononuclear or dinuclear unsaturated or partly unsaturated heterocycles of 4 to 10 carbon atoms which may be benzofused and may carry additional functional groups, and/or
d) from 0.05 to 5% by weight of one or more tetra-(C₁-C₈-alkoxy)silanes (tetra-C₁-C₈-alkyl esters of orthosilicic acid), based on the total amount of concentrate.

4. The process according to any of claims 1 to 3, wherein the antifreeze concentrates additionally comprise compounds stated below
e) from 0.05 to 5% by weight, based on the total amount of the concentrate, of one or more aliphatic, cycloaliphatic or aromatic monocarboxylic acids, each of 3 to 16 carbon atoms, in the form of their alkali metal, ammonium or substituted ammonium salts and/or
f) from 0.05 to 5% by weight, based on the total amount of concentrate, of one or more aliphatic or aromatic dicarboxylic acids, each of 3 to 20 carbon atoms, in the form of their alkali metal, ammonium or substituted ammonium salts and/or
g) one or more alkali metal borates, alkali metal phosphates, alkali metal silicates, alkali metal nitrites, alkali metal or alkaline earth metal nitrates, molybdates or alkali metal or alkaline earth metal fluorides in amounts of, in each case, up to 1% by weight, based on the total amount of the concentrate, and/or
h) up to 1% by weight, based on the total amount of the concentrate, of one or more hard water stabilizers based on polyacrylic acid, polymaleic acid, acrylic acid/maleic acid copolymers, polyvinylpyrrolidone, polyvinylimidazole, vinylpyrrolidone/vinylimidazole copolymers and/or copolymers of unsaturated carboxylic acids and olefins.

5. The process according to any of claims 1 to 4, wherein the antifreeze concentrates have a pH of from 4 to 11.

6. The process according to any of claims 1 to 5, wherein the antifreeze concentrates are based on ethylene glycol or propylene glycol or a mixture of alkylene glycols or of glycerol with ethylene glycol and propylene glycol, which comprises in each case at least 95% by weight of ethylene glycol and/or propylene glycol and/or glycerol.

7. The process according to any of claims 1 to 6, wherein the coolant compositions represent ready-to-use aqueous coolant composition having a depressed freezing point, which comprise water and from 10 to 90% by weight of the antifreeze concentrate.

8. The use of antifreeze concentrates according to any of claims 1 to 6 for the preparation of aqueous coolant compositions for magnesium or magnesium alloy internal combustion engines.

## Revendications

1. Procédé de protection contre la corrosion de moteurs thermiques en magnésium ou en alliages de magnésium, **caractérisé en ce que** l'on utilise, pour les circuits de refroidissement des moteurs thermiques, des compositions de fluides de refroidissement à base de concentrés d'antigels à base d'alkylène glycols ou de leurs dérivés ou de glycérol, contenant :
a) de 0,05 à 10 % en poids, par rapport à la quantité totale du concentré, d'un ou plusieurs amides d'acide carboxylique et/ou d'amides d'acide sulfonique.

2. Procédé suivant la revendication 1, dans lequel le composant a) est formé d'un ou plusieurs amides d'acide carboxylique et/ou d'amides acide sulfonique aliphatiques, cycloaliphatiques, aromatiques ou hétéroaromatiques comportant à chaque fois de 2 à 16 atomes de C, de préférence à chaque fois de 3 à 12 atomes de C.

3. Procédé suivant les revendications 1 à 2, dans lequel les concentrés d'antigels contiennent en outre des composés non ioniques indiqués ci-après :
b) de 0,05 à 5 % en poids, par rapport à la quantité totale du concentré, d'une ou plusieurs amines aliphatiques, cycloaliphatiques ou aromatiques comportant de 2 à 15 atomes de C, et qui peuvent contenir en outre des atomes d'oxygène d'éther ou des groupes hydroxyle, et/ou
c) de 0,05 à 5 % en poids, par rapport à la quantité totale du concentré, d'un ou plusieurs hétérocycles insaturés ou partiellement insaturés, à un ou deux noyaux et comportant de 4 à 10 atomes de C, qui peutvent être fusionnés à un noyau benzène et peuvent en outre porter des groupes fonctionnels, et/ou
d) de 0,05 à 5 % en poids d'un ou plusieurs tétra-(C₁-C₈) alcoxysilane (esters tétra (C₁-C₈) alkyliques de l'acide orthosilicique), par rapport à la quantité totale du concentré,

4. Procédé suivant l'une quelconque des revendications 1 à 3, dans lequel les concentrés d'antigels contiennent en outre des composés indiqués ci-après :
e) de 0,05 à 5 % en poids, par rapport à la quantité totale du concentré, d'un ou plusieurs acides monocarboxyliques aliphatiques, cycloaliphatiques ou aromatiques comportant à chaque fois de 3 à 16 atomes de C, sous la forme de leurs sels de métaux alcalins, d'ammonium ou d'ammonium substitué, et/ou
f) de 0,05 à 5 % en poids, par rapport à la quantité totale du concentré, d'un ou plusieurs acides dicarboxyliques aliphatiques ou aromatiques comportant à chaque fois de 3 à 20 atomes de C sous la forme de leurs sels de métaux alcalins, d'ammonium ou d'ammonium substitué, et/ou
g) un ou plusieurs borates de métaux alcalins, phosphates de métaux alcalins, silicates de métaux alcalins, nitrites de métaux alcalins, nitrates de métaux alcalins, ou alcalino-terreux, de molybdates ou de fluorures de métaux alcalins ou alcalino-terreux en des quantités respectivement allant jusqu'à 1 % en poids, par rapport à la quantité totale du concentré, et/ou
h) jusqu'à 1 % en poids, par rapport à la quantité totale du concentré, d'un ou plusieurs stabilisants d'eau dure à base de poly(acide acrylique), de poly(acide maléique), de copolymères d'acide acrylique-acide maléique, de polyvinylpyrrolidone, de polyvinylimidazole, de copolymères de vinylpyrrolidonevinylimidazole et/ou de copolymères d'acides carboxyliques insaturés et d'oléfines.

5. Procédé suivant la revendication 1 à 4, dans lequel les concentrés d'antigels présentent un pH de l'ordre de 4 à 11.

6. Procédé suivant les revendications 1 à 5, dans lequel les concentrés d'antigels sont à base d'éthylène glycol ou de propylène glycol ou de mélanges d'alkylène glycols ou de glycérol avec de l'éthylène glycol ou du propylène glycol, qui contiennent à chaque fois au moins 95% en poids d'éthylène glycol et/ou de propylène glycol et/ou de glycérol.

7. Procédé suivant les revendications 1 à 6, dans lequel les compositions de fluides de refroidissement sont des compositions aqueuses de fluides de refroidissement prêtes à l'emploi, à point de congélation abaissé, qui comprennent de l'eau et de 10 à 90 % en poids du concentré d'antigel.

8. Utilisation de concentrés d'antigels suivant les revendications 1 à 6 pour la préparation de compositions aqueuses de fluides de refroidissement pour moteurs thermiques en magnésium ou en alliages de magnésium.
